# EUROPEAN PATENT SPECIFICATION

(11) **EP 3 839 015 B1**
(45) Date of publication and mention of the grant of the patent: **27.04.2022**
(21) Application number: 19020717.5
(22) Date of filing: 20.12.2019
(51) Int. Cl.: C10L 3/08, C04B 7/36, C10G 2/00

(54) **METHOD OF PROCESSING EXHAUST GAS**
VERFAHREN ZUR BEHANDLUNG VON ABGAS
PROCÉDÉ DE TRAITEMENT DE GAZ D'ÉCHAPPEMENT

(43) Date of publication of application: 23.06.2021
(73) Proprietor: Holcim Technology Ltd, 6300 Zug (CH)
(72) Inventor: Boes, Karl-Heinz, 5113 Holderbank (CH); Weber, Mirko, 5113 Holderbank (CH); Stoffel, Beat, 5113 Holderbank (CH)
(74) Representative: Keschmann, Marc

(56) References cited:
- EP-A1- 1 923 367
- EP-A1- 2 818 227
- DE-A1-102010 019 330
- DE-U1- 20 320 020
- MOHAMMAD RAHIM VASEGHI ET AL: "A review of energy efficiency and CO 2 emissions in the US cement industry", 2012 IEEE-IAS/PCA 53RD CEMENT INDUSTRY TECHNICAL CONFERENCE; SAN ANTONIO, TX ; 14-17 MAY 2012, IEEE, PISCATAWAY, NJ, USA, 14 May 2012 (2012-05-14), pages 1-9, XP032186202, DOI: 10.1109/CITCON.2012.6215686 ISBN: 978-1-4673-0284-5
- VASUDEVAN SURAJ ET AL: "Energy penalty estimates for CO2capture: Comparison between fuel types and capture-combustion modes", ENERGY, ELSEVIER, AMSTERDAM, NL, vol. 103, 29 March 2016 (2016-03-29), pages 709-714, XP029533234, ISSN: 0360-5442, DOI: 10.1016/J.ENERGY.2016.02.154

## Description

The invention relates to a method of processing exhaust gas containing CO₂ and O₂, such as exhaust gas from a cement production plant.

In known processes for producing cement clinker, raw material fed into a rotary kiln is preheated and partially decarbonated in a multistage preheater system by using the heat of combustion gases exhausted from the rotary kiln. The preheated raw material is fed into the rotary kiln via the kiln inlet and travels to the kiln outlet while being calcined at temperatures of up to 1400°C.

Carbon dioxide (CO₂) is the most significant long-lived greenhouse gas in the Earth's atmosphere. The use of fossil fuels and deforestation have rapidly increased its concentration in the atmosphere, leading to global warming. Carbon dioxide also causes ocean acidification, because it dissolves in water to form carbonic acid.

The cement industry is an important emitter of CO₂. Within the cement production process, significant amounts of CO₂ are generated during the decarbonation of raw meal (containing CaCO₃) to lime (CaO). During the production of Portland cement clinker about 0,9 tons of CO₂ per ton of Portland cement clinker are emitted by the calcination of the raw materials and from the fuel combustion in the rotary kiln.

The use of alternative fuels, in particular renewable fuels, in the rotary kiln burner may reduce the amounts of greenhouse gases. However, substantial amounts of CO₂ are still produced by the decarbonation of raw meal and emitted into the atmosphere.

It has been proposed to use carbon capture and sequestration methods in order to reduce or prevent the emission of CO₂ from industrial processes into the atmosphere. Such methods comprise capturing CO₂ from flue gases for storage or for use in other industrial applications.

Several technologies have been developed to extract and capture CO₂ from such flue gases in order to allow carbon sequestration. A known technology for capturing CO₂ present in flue gases is amine scrubbing. This process consists of extracting the CO₂ fraction from a post-combustion flue gas by flushing the gases with an amine solvent, regenerating the solvent by steam stripping, thus releasing nearly pure CO₂, and recycling the stripped solvent to the absorber. Although this technology is very efficient, it is also quite expensive.

Alternatively, CO₂ can be absorbed from a CO₂ containing gas by means of chemical absorption with KOH or NaOH solutions.

Once extracted from the CO₂ containing gas, CO₂ can be stored in different ways, such as, e.g., in stable carbonate mineral forms. The respective process is known as "carbon sequestration by mineral carbonation". The process involves reacting carbon dioxide with a carbonatable solid material, said material comprising metal oxides, in particular magnesium oxide (MgO) or calcium oxide (CaO), to form stable carbonates.

Alternatively, it has also been proposed to convert the CO₂ captured from the exhaust gas into a renewable fuel by adding H₂.

The known methods for extracting and capturing CO₂ from flue gases for further processing the CO₂ in concentrated form are cumbersome and costly.

Therefore, it is a purpose of this invention to provide an improved method of processing exhaust gas that avoids any CO₂ emission into the atmosphere and that allows for a CO₂ concentration from the exhaust gas at a low price.

In order to solve these objectives, the invention provides a method of processing exhaust gas containing CO₂ and O₂, such as exhaust gas from a cement production plant, comprising the steps of:
- introducing the exhaust gas into a combustion reactor,
- burning fuel in the combustion reactor with the O₂ content of the exhaust gas being used as an oxidizing agent,
- controlling the combustion in the combustion reactor so that the exhaust gas from the combustion reactor contains less than 10 vol.-% of oxygen and at least 80 vol.-% of a mixture of CO and CO₂,
- feeding the exhaust gas from the combustion reactor into a CO₂/CO conversion reactor, in which the CO₂ and optionally the CO contained in the exhaust gas is converted into a hydrocarbon fuel, in particular a combustible fuel.

The method coverts the entire CO₂ contained in the exhaust gas into a hydrocarbon fuel, in particular a combustible fuel. Preferably, the exhaust gas is taken from a cement kiln preheater of the cement production plant.

The inventive method does not require any CO₂ extracting or capturing step in order to extract or capture the CO₂ from the exhaust gas. Instead, the CO₂ initially present in the exhaust gas at a relatively low fraction, is concentrated by using the O₂ content of the exhaust gas as an oxidizing agent for burning fuel in a combustion reactor. In this way, the O₂ content of the exhaust gas is reduced and the CO₂ and optionally the CO content of the exhaust gas is increased so that the exhaust gas leaving the combustion reactor contains at least 80 vol.-%, preferably at least 90 vol.-%, of a mixture of CO and CO₂. In this way, a gas having a high CO₂ concentration can be fed to the CO₂/CO conversion reactor so that the conversion into a hydrocarbon fuel, in particular a combustible fuel in said CO₂/CO conversion reactor may be effected in a highly efficient and cost effective way.

Preferably, the exhaust gas to be processed with the method of the invention has a N₂ content of < 20 vol.-%. In order to reduce the N₂ content in the exhaust gas, in the case of an exhaust gas coming from a cement production plant, the combustion air for the combustion in the cement kiln and the pre-calciner may be enriched with O₂ or may be pure O₂. Further, the combustion air for the combustion in the combustion reactor may be enriched with O₂ or may be pure O₂. Preferably, the combustion air added to the kiln system and/or the combustion reactor is enriched with oxygen, with the combustion air having an O₂ content of 21 - 100%.

The fuel burnt in the combustion reactor may be any kind of solid or liquid or gaseous fuel.

The renewable fuel produced by the inventive method may be used in many ways, e.g. as an alternative fuel for the kiln burner of a cement kiln or as a fuel for other industries, e.g. as renewable aviation fuel.

According to a preferred embodiment, the hydrocarbon fuel, in particular the combustible fuel, obtained from the conversion reactor is fed to the burner of a cement kiln of the cement production plant as a fuel. In this way, the clinker production process has no CO₂ emissions anymore (is carbon neutral), because all carbon resulting from the combustion of fuels in the clinker production process and from the decarbonation of cement raw material is converted into a hydrocarbon fuel, in particular a renewable combustible fuel.

The term "renewable fuel" is understood to mean fuels that originate from renewable sources or are produced from renewable resources, such as biofuels (e.g. vegetable oil, biomass, and biodiesel). This is in contrast to non-renewable fuels such as natural gas, LPG (propane), petroleum and other fossil fuels.

Preferably, at least part of the exhaust gas, before being introduced into the combustion reactor, is first used to dry a solid fuel, in particular a solid renewable fuel, in a first drying unit, thereby obtaining a dried fuel, whereupon the dried fuel is optionally ground to obtain a ground fuel. Here, the exhaust gas is used as a source of heat for the drying of the solid fuels. Various types of solid fuels may be used, such as, e.g., charcoal, bio coal, biomass or petcoke. The fuel dried in the first drying unit and then optionally ground may preferably be used as the fuel in the combustion reactor. Alternatively, the fuel that is burned in the combustion reactor, is a fuel different from the fuel that is dried in first drying unit and then optionally ground. Alternatively, the fuel burned in the combustion reactor may be a mixture of the fuel that has been dried in the first drying unit and then optionally ground and of a different fuel. Additionally, this fuel can also be the renewable fuel or by-product produced in the CO₂/CO conversion reactor.

According to a preferred embodiment, the exhaust gas can also be used as a source of heat for drying the raw mix that is used for the preparation of cement. In this context, the inventive method is preferably characterized in that at least part of the exhaust gas is used to dry cement raw meal in a second drying unit, thereby obtaining a dried raw meal, wherein the dried raw meal is ground to obtain a ground raw meal, which is fed into a preheater of a cement production plant.

As mentioned above, a combustion reactor is used in the second step of the method for burning fuel. The combustion reactor may be any reactor that is suitable for controlling the combustion so that the exhaust gas from the combustion reactor contains less than 10 vol.-% of oxygen and at least 80 vol.-% of a mixture of CO and CO₂. Preferably, the combustion reactor is a carbon monoxide reactor, in which the carbon contained in the fuel is converted into carbon monoxide and carbon dioxide by consuming the O₂ contained in the exhaust gas. The ratio of CO to CO₂ in the exhaust gas of the combustion reactor may be adjusted as required by the CO₂/CO conversion reactor.

For example, the combustion reactor may be a hot gas generator, such as a hot gas generator supplied by Fives (Pillard).

The combustion in the combustion reactor is controlled so as to maximize the CO and CO₂ content of the exhaust gas. Further, the combustion in the combustion reactor is controlled to limit the O₂ content of the exhaust gas to below 10 vol.-%, preferably below 5 vol.-%. This is preferably achieved by controlling the amount of fuel fed into the reactor.

According to a preferred embodiment, the exhaust gas from the combustion reactor, before being fed into the CO_{2/}CO conversion reactor, is conducted through a heat exchanger to cool the exhaust gas to a temperature of preferably 20-300°C. Consequently this heat can be used to dry raw materials or fuels or to generate electricity.

Various types of conversion reactors may be used for converting the CO and/or the CO₂ contained in the exhaust gas coming from the combustion reactor into a hydrocarbon fuel, in particular a combustible fuel.

Preferably, the conversion reactor is a bioreactor, a catalytic reactor or a power-to-fuel reactor. The bioreactor may comprise a fermentation process. As an example, a bioreactor as supplied by LanzaTech or Electrochaea GmbH may be used.

Alternatively, the bioreactor may comprise a catalytic reaction. In particular, catalytic reactors which use the Fischer-Tropsch process may be used.

Preferably, by-products produced in the conversion reactor, such as proteins, are fed to a combustion process, such as to the burner of a cement kiln, of the cement production plant as a fuel.

The hydrocarbon fuel, in particular the combustible fuel, produced by the conversion reactor may be biomethane, methanol, or a renewable fuel for aviation or transportation, e.g. gasoline or kerosene. In general, the hydrocarbon fuel may be produced in gaseous or liquid form and may be any type of low or high molecular weight hydrocarbon fuel. The hydrocarbon product of the conversion reactor can be used as a hydrocarbon fuel, or alternatively be used as a chemical for chemical synthesis, for example.

The invention will now be described in more detail with reference to the attached drawing.

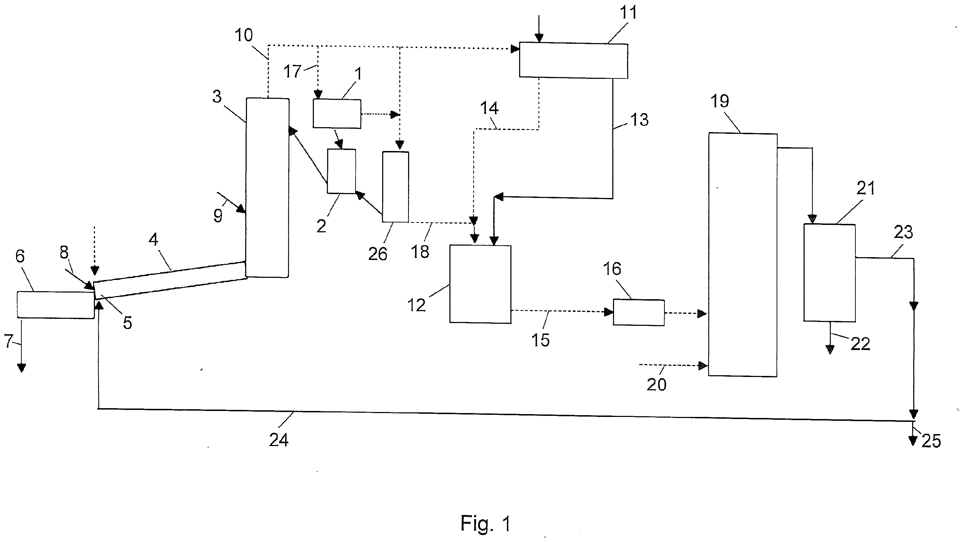

Fig. 1 schematically illustrates a cement production process, into which the inventive method has been incorporated. In the cement clinker production plant raw meal is charged into a raw meal mill 1 and the ground raw meal is stored in a raw meal silo 2. The ground raw meal stored in the raw meal silo 2 is charged into a preheater 3, where it is preheated in counter-current to the hot exhaust gases coming from a rotary clinker kiln 4. The preheated and optionally pre-calcined raw meal is then introduced into the rotary kiln 4, where it is calcined to obtain cement clinker. The clinker leaves the rotary kiln 4 at a point denoted by 5 and is cooled in a clinker cooler 6. The cooled clinker leaves the clinker cooler 6 at the point denoted by 7.

The firing system of the rotary kiln 4 is fed with fuel, as is schematically illustrated by 8. Additional fuel may be introduced into the pre-calciner of the preheater 3, as is schematically illustrated by 9. Preferably, an alternative fuel, such as a renewable fuel is used in the firing system of the rotary kiln 4 and/or in the pre-calciner.

The exhaust gas exiting the preheater 3 at 10 contains CO₂ and O₂. According to the invention, the exhaust gas is introduced into a mill 11, in which solid fuel, such as charcoal, bio coal, biomass or petcoke is dried by means of the heat of the exhaust gas and is ground. The mill 11 thus serves as a drying unit for the solid fuel.

Preferably, a portion of the exhaust gas exiting the preheater 3 may be used to dry the raw meal in the raw meal mill 1, as denoted by 17.

Preferably, a portion of the exhaust gas exiting the preheater 3 may be fed into a high temperature dust separator 26 to remove dust contained in the exhaust gases.

The ground solid fuel is discharged from the mill 11 and introduced into a combustion reactor 12 via the line 13. In the combustion reactor 12 the ground fuel is burnt with the exhaust gas coming from the mill 11 via the line 14, and optionally with the exhaust gas coming from the mill 1 via the line 18, wherein the carbon contained in the ground fuel is converted into carbon monoxide and carbon dioxide, while consuming the O₂ contained in the exhaust gas. The combustion in the combustion reactor 12 is controlled so as to maximize the content of CO and CO₂, and to minimize the O₂ content, in the exhaust gas leaving the combustion reactor via the line 15. In particular, the exhaust gas from the combustion reactor 12 contains less than 10 vol.-% of O₂ and at least 80 vol.-% of a mixture of CO and CO₂.

The exhaust gas from the combustion reactor 12 is conducted through a heat exchanger 16 to cool the exhaust gas. Then, the exhaust gas is introduced into a CO₂/CO conversion reactor 19, in order to convert the CO₂ and optionally the CO content of the exhaust gas into a combustible fuel. Hydrogen may be introduced into the CO_{2/}CO conversion reactor 19 at 20, in order to assist the reaction taking place in the CO₂/CO conversion reactor 19. Preferably, the hydrogen has been produced from a renewable energy source or by using renewable energy, such as electricity from a renewal energy source. The product produced by the CO₂/CO conversion reactor 19 is collected in a separator 21, in which by-products e.g. protein 22 is separated from a gaseous or liquid combustible fuel 23, such as biomethane, methanol or any other hydrocarbon fuel, in particular low molecular weight hydrocarbon fuel.

The combustible fuel may be used for firing the firing system of the rotary kiln 4, as illustrated by the line 24 or may be dispatched at 25 and used for any other purpose.

## Claims

1. A method of processing exhaust gas containing CO₂ and O₂, such as exhaust gas from a cement production plant, comprising the steps of:
- introducing the exhaust gas into a combustion reactor,
- burning fuel in the combustion reactor with the O₂ content of the exhaust gas being used as an oxidizing agent,
- controlling the combustion in the combustion reactor so that the exhaust gas from the combustion reactor contains less than 10 vol.-% of oxygen and at least 80 vol.-% of a mixture of CO and CO₂,
- feeding the exhaust gas from the combustion reactor into a CO_{2/}CO conversion reactor, in which the CO₂ and optionally the CO contained in the exhaust gas is converted into a hydrocarbon fuel.

2. A method according to claim 1, wherein at least a part of the exhaust gas, before being introduced into the combustion reactor, is used to dry a solid fuel, in particular a solid renewable fuel, in a first drying unit, thereby obtaining a dried fuel, whereupon the dried fuel is optionally ground to obtain a ground fuel.

3. A method according to claim 2, wherein the dried and optionally ground fuel is used as the fuel in the combustion reactor.

4. A method according to claim 1, 2 or 3, wherein at least part of the exhaust gas is used to dry cement raw meal in a second drying unit, thereby obtaining a dried raw meal, wherein the dried raw meal is ground to obtain a ground raw meal, which is fed into a preheater of a cement production plant.

5. A method according to any one of claims 1 to 4, wherein the CO_{2/}CO conversion reactor is a bioreactor, a catalytic reactor or a power-to-fuel reactor.

6. A method according to any one of claims 1 to 5, wherein by-products produced in the CO₂/CO conversion reactor, such as proteins, are fed to a combustion process, such as to the burner of a cement kiln, the pre-calciner burner and/or the combustion reactor burner of the cement production plant as a fuel.

7. A method according to any one of claims 1 to 6, wherein the hydrocarbon fuel, in particular the combustible fuel, obtained from the CO₂/CO conversion reactor is fed to a combustion process, such as the burner of a cement kiln, the pre-calciner burner and/or the combustion reactor burner of the cement production plant as a fuel.

8. A method according to any one of claims 1 to 7, wherein the exhaust gas from the combustion reactor, before being fed into the CO₂/CO conversion reactor, is conducted through a heat exchanger to cool the exhaust gas to a temperature of preferably 20-300°C.

9. A method according to any one of claims 1 to 8, wherein the exhaust gas is taken from a cement raw meal preheater of the cement production plant.

## Patentansprüche

1. Verfahren zur Behandlung von CO₂ und O₂ enthaltendem Abgas, wie z.B. Abgas aus einer Zementproduktionsanlage, umfassend die folgenden Schritte:
- Einleiten des Abgases in einen Verbrennungsreaktor,
- Verbrennen von Brennstoff im Verbrennungsreaktor, wobei der O₂-Gehalt des Abgases als Oxidationsmittel verwendet wird,
- Steuern der Verbrennung im Verbrennungsreaktor, dass das Abgas aus dem Verbrennungsreaktor weniger als 10 Vol.-% Sauerstoff und mindestens 80 Vol.-% einer Mischung aus CO und CO₂ enthält,
- Zuführen des Abgases aus dem Verbrennungsreaktor in einen CO₂/CO-Konversionsreaktor, in dem das im Abgas enthaltene CO₂ und gegebenenfalls CO in einen Kohlenwasserstoffbrennstoff umgewandelt wird.

2. Verfahren nach Anspruch 1, bei dem zumindest ein Teil des Abgases, bevor es in den Verbrennungsreaktor eingeleitet wird, zum Trocknen eines festen Brennstoffs, insbesondere eines festen erneuerbaren Brennstoffs, in einer ersten Trocknungseinheit verwendet wird, wodurch ein getrockneter Brennstoff erhalten wird, woraufhin der getrocknete Brennstoff gegebenenfalls gemahlen wird, um einen gemahlenen Brennstoff zu erhalten.

3. Verfahren nach Anspruch 2, wobei der getrocknete und gegebenenfalls gemahlene Brennstoff als Brennstoff in dem Verbrennungsreaktor verwendet wird.

4. Verfahren nach Anspruch 1, 2 oder 3, wobei mindestens ein Teil des Abgases zum Trocknen von Zementrohmehl in einer zweiten Trocknungseinheit verwendet wird, wodurch ein getrocknetes Rohmehl erhalten wird, wobei das getrocknete Rohmehl gemahlen wird, um ein gemahlenes Rohmehl zu erhalten, das in einen Vorwärmer einer Zementproduktionsanlage eingeführt wird.

5. Verfahren nach einem der Ansprüche 1 bis 4, wobei der CO₂/CO-Konversionsreaktor ein Bioreaktor, ein katalytischer Reaktor oder ein Power-to-Fuel-Reaktor ist.

6. Verfahren nach einem der Ansprüche 1 bis 5, wobei in dem CO₂/CO-Konversionsreaktor erzeugte Nebenprodukte, wie z.B. Proteine, einem Verbrennungsprozess, wie z.B. dem Brenner eines Zementofens, dem Brenner des Vorkalzinators und/oder dem Brenner des Verbrennungsreaktors der Zementproduktionsanlage als Brennstoff zugeführt werden.

7. Verfahren nach einem der Ansprüche 1 bis 6, wobei der aus dem CO₂/CO-Konversionsreaktor gewonnene Kohlenwasserstoffbrennstoff, insbesondere der brennbare Brennstoff, einem Verbrennungsprozess, wie dem Brenner eines Zementofens, dem Brenner des Vorkalzinators und/oder dem Brenner des Verbrennungsreaktors der Zementproduktionsanlage, als Brennstoff zugeführt wird.

8. Verfahren nach einem der Ansprüche 1 bis 7, wobei das Abgas aus dem Verbrennungsreaktor, bevor es in den CO₂/CO-Konversionsreaktor geleitet wird, durch einen Wärmetauscher geleitet wird, um das Abgas auf eine Temperatur von vorzugsweise 20-300°C zu kühlen.

9. Verfahren nach einem der Ansprüche 1 bis 8, wobei das Abgas aus einem Zementrohmehlvorwärmer der Zementproduktionsanlage entnommen wird.

## Revendications

1. Procédé de traitement de gaz d'échappement contenant du CO₂ et de l'O₂, tel que des gaz d'échappement d'une installation de production de ciment, comprenant les étapes consistant à :
- introduire les gaz d'échappement dans un réacteur de combustion,
- brûler le carburant dans le réacteur de combustion, la teneur en O₂ du gaz d'échappement étant utilisée comme agent oxydant,
- réguler la combustion dans le réacteur de combustion de sorte que les gaz d'échappement provenant du réacteur de combustion contiennent moins de 10 % en volume d'oxygène et au moins 80 % en volume d'un mélange de CO et de CO₂,
- introduire les gaz d'échappement du réacteur de combustion dans un réacteur de conversion CO_{2/}CO, dans lequel le CO₂ et éventuellement le CO contenus dans les gaz d'échappement sont convertis en un carburant hydrocarboné.

2. Procédé selon la revendication 1, dans lequel au moins une partie des gaz d'échappement, avant d'être introduite dans le réacteur de combustion, est utilisée pour sécher un carburant solide, en particulier un carburant renouvelable solide, dans une première unité de séchage, obtenant ainsi un carburant séché, après quoi le carburant séché est éventuellement broyé pour obtenir un carburant broyé.

3. Procédé selon la revendication 2, dans lequel le carburant séché et éventuellement broyé est utilisé comme le carburant dans le réacteur de combustion.

4. Procédé selon la revendication 1, 2 ou 3, dans lequel au moins une partie des gaz d'échappement est utilisée pour sécher la farine brute de ciment dans une seconde unité de séchage, obtenant ainsi une farine brute séchée, dans lequel la farine brute séchée est broyée pour obtenir une farine brute broyée, qui est introduite dans un préchauffeur d'une installation de production de ciment.

5. Procédé selon l'une quelconque des revendications 1 à 4,
dans lequel le réacteur de conversion CO_{2/}CO est un bioréacteur, un réacteur catalytique ou un réacteur de puissance à carburant.

6. Procédé selon l'une quelconque des revendications 1 à 5,
dans lequel les sous-produits produits dans le réacteur de conversion CO₂/CO, tels que les protéines, sont introduits dans un processus de combustion, tel que le brûleur d'un four à ciment, le brûleur de précalcination et/ou le brûleur de réacteur de combustion de l'installation de production de ciment en tant que carburant.

7. Procédé selon l'une quelconque des revendications 1 à 6,
dans lequel le carburant hydrocarboné, en particulier le carburant combustible, obtenu à partir du réacteur de conversion CO_{2/}CO est introduit dans un processus de combustion, tel que le brûleur d'un four à ciment, le brûleur de précalcination et/ou le brûleur de réacteur de combustion de l'installation de production de ciment en tant que carburant.

8. Procédé selon l'une quelconque des revendications 1 à 7,
dans lequel les gaz d'échappement provenant du réacteur de combustion, avant d'être introduits dans le réacteur de conversion CO₂/CO, sont conduits à travers un échangeur de chaleur pour refroidir les gaz d'échappement à une température de préférence comprise entre 20 et 300 °C.

9. Procédé selon l'une quelconque des revendications 1 à 8,
dans lequel les gaz d'échappement sont prélevés d'un préchauffeur de farine brute de ciment de l'installation de production de ciment.
